# EUROPÄISCHE PATENTSCHRIFT

(11) **EP 2 789 485 B1**
(45) Veröffentlichungstag und Bekanntmachung des Hinweises auf die Patenterteilung: **08.06.2016**
(21) Anmeldenummer: 14163107.7
(22) Anmeldetag: 02.04.2014
(51) Int. Cl.: B60J 7/10, B60P 7/08, E05B 13/00, B60J 5/06

(54) **Hebelanordnung zum Verschließen eines Nutzfahrzeug-Ladeaufbaus**
Lever assembly for locking a commercial vehicle load structure
Dispositif de levier permettant de fermer une structure de chargement de véhicule utilitaire

(30) Priorität: 12.04.2013 DE 102013103684
(43) Veröffentlichungstag der Anmeldung: 15.10.2014
(73) Patentinhaber: F. Hesterberg & Söhne GmbH & Co. KG, 58256 Ennepetal (DE)
(72) Erfinder: Krüger, Friedrich, 58256 Ennepetal (DE)
(74) Vertreter: Bungartz Christophersen Partnerschaft mbB Patentanwälte

(56) Entgegenhaltungen:
- EP-A2- 1 642 683
- DE-U1- 20 012 724
- US-A- 5 369 970

## Beschreibung

Die Erfindung betrifft eine Hebelanordnung zum Verschließen eines Nutzfahrzeug-Ladeaufbaus, bestehend aus einem an dem Ladeaufbau befestigbaren Basisteil und einem um eine Achse verschwenkbar gegenüber dem Basisteil angeordneten Handhebel, der der Schwenkachse abgewandt mit einem Handgriff versehen und durch einen in dem Handhebel oder in dem Basisteil gelagerten Riegel an dem Basisteil blockierbar ist, wobei zum Hindurchführen eines draht- oder seilförmigen Zollsiegels das Basisteil einerseits und der Handhebel andererseits mit in der Blockierstellung des Handhebels sich zumindest teilweise überdeckenden Öffnungen versehen sind.

Hebelanordnungen zum Verschließen von Nutzfahrzeug-Ladeaufbauten mit diesen Merkmalen sind z. B. aus der EP 1 900 569 A2, der EP 0 893 558 B1 und der DE 10 2004 059 339 A1 bekannt. Sie bestehen jeweils aus einem Basisteil und einem um eine Achse verschwenkbar gegenüber dem Basisteil angeordneten Handhebel, der an seinem der Schwenkachse abgewandten Ende einen Handgriff aufweist. Für Zollzwecke lässt sich die Hebelanordnung in der Schließstellung des Handhebels plombieren. Hierzu wird ein draht-oder seilförmiges Zollsiegel zugleich durch Öffnungen in dem Basisteil und in dem Handhebel hindurchgezogen, die sich zu diesem Zweck zumindest teilweise überdecken.

Die Praxis hat gezeigt, dass zwar durch diese Maßnahmen kein unbefugtes Öffnen des Handhebels im Sinne eines Herausschwenkens aus dem Basisteil ohne Beschädigung des Zollsiegels möglich ist, dass jedoch Manipulationen im Bereich der Achse, um die herum der Handhebel schwenkbar ist, nicht gänzlich ausgeschlossen sind.

Daher liegt der Erfindung die Aufgabe zugrunde, eine Hebelanordnung hinsichtlich ihrer Manipulierbarkeit im für Zollzwecke plombierten Zustand sicherer zu gestalten.

Zur Lösung dieser Aufgabe wird bei einer Hebelanordnung mit den Merkmalen des Oberbegriffs ein auf die Hebelanordnung aufgesetztes Schutzgehäuse mit daran einstückig ausgebildeten ersten und zweiten Gehäuseabschnitten vorgeschlagen, wobei der erste Gehäuseabschnitt den Bereich der Schwenkachse der Hebelanordnung nach außen hin abdeckt, und der zweite Gehäuseabschnitt den zwischen der Schwenkachse und dem Handgriff angeordneten, mittleren Bereich der Hebelanordnung schalenförmig übergreift und mit mindestens einer Gehäuseöffnung versehen ist, die in der Blockierstellung zu der Öffnung in dem Basisteil fluchtet.

Bei einer solchen Hebelanordnung sind etwaige Manipulationen im Bereich der Achse, um die der Handhebel verschwenkbar ist, zumindest erheblich erschwert. Zu diesem Zweck ist ein zusätzliches Schutzgehäuse vorgesehen, welches bei geschlossenem Handhebel auf die Anordnung aus Basisteil und Handhebel lösbar aufgesetzt ist. Dieses Schutzgehäuse bildet daher eine zusätzliche Schutzhaube, die mit einem an ihr ausgebildeten Gehäuseabschnitt den Bereich der Schwenkachse nach außen hin abgedeckt, so dass dieser Bereich für Manipulationen nicht mehr zugänglich ist, zumindest nicht ohne eine Beschädigung oder Zerstörung der zusätzlichen Schutzhaube. Der andere Gehäuseabschnitt der aufgesetzten Schutzhaube ist in der Weise ausgebildet, dass er den zwischen der Schwenkachse und dem Handgriff angeordneten, mittleren Bereich der Hebelanordnung nach Art einer Schale übergreift. In diesem Bereich ist die Schutzhaube mit mindestens einer Gehäuseöffnung versehen, die bei geschlossenem Handhebel zu der dahinter angeordneten Öffnung in dem Basisteil fluchtet, und vorzugsweise außerdem zu der dahinter angeordneten Öffnung in dem Handhebel. Durch die in dem schalenförmigen zweiten Gehäuseabschnitt ausgebildete Gehäuseöffnung lässt sich mittels des dort hindurchgeführten Zollsiegels eine nicht ohne weiteres manipulierbare Befestigung des Schutzgehäuses an dem starr mit dem Ladeaufbau verschraubten Basisteil erzielen. Dabei umschließt das Schutzgehäuse teilweise auch den Handhebel, ist jedoch an dem Basisteil gesichert.

Mit einer Ausgestaltung der Hebelanordnung wird vorgeschlagen, dass der den mittleren Bereich der Hebelanordnung übergreifende zweite Gehäuseabschnitt des Schutzgehäuses U-förmig gestaltet ist, wobei jeder der beiden Schenkel der U-Form mit einer Gehäuseöffnung versehen ist, die zu der Öffnung in dem Basisteil und vorzugsweise zusätzlich zu einer Öffnung in dem Handhebel fluchtet.

Um Manipulationen im Bereich der Schwenkachse weiter zu erschweren, wird mit einer weiteren Ausgestaltung vorgeschlagen, dass der erste Gehäuseabschhitt des Schutzgehäuses als ein Kreissegment gestaltet ist, dessen Kreismittelpunktachse mit der Schwenkachse, um die der Handhebel verschwenkbar ist, zusammenfällt. Das Kreissegment sollte sich über einen Winkel von mehr als 90° erstrecken, vorzugsweise über einen Winkel von 110 ° bis 180 °.

Das Schutzgehäuse kann zu seiner Versteifung mit Rippen oder Sicken versehen sein und besteht vorzugsweise aus Kunststoff oder Metall, wobei im Falle des Werkstoffs Metall ein durch Umformen eines Blechstanzteils hergestelltes Schutzgehäuse von Vorteil ist.

Bei einer Ausgestaltung der Hebelanordnung ist diese als eine Ratschenanordnung zum Spannen einer auf eine Spannwelle aufwickelbaren Seitenplane des Nutzfahrzeug-Ladeaufbaus durch Drehen der Schwenkachse und damit Aufwickeln der Seitenplane ausgebildet. Hierbei weist die Achse, um die der Handhebel schwenkbar ist, an einem Ende einen Antriebsabschnitt zur Übertragung der Drehung auf die Spannwelle auf. Bei dieser Ausgestaltung der Hebelanordnung ist ein Mittelabschnitt der Schwenkachse als ein mit einer Zahnung versehenes Ratschenrad ausgebildet, und die Schwenkachse ist über einen zum Eingriff in die Zahnung ausgebildeten Klinkenmechanismus drehbar. Dieser Klinkenmechanismus setzt sich vorzugsweise zusammen aus einer beweglich an dem Handhebel gelagerten Mitnahmeklinke sowie einer Sperrklinke, die schwenkbar auf einer an dem Basisteil angeordneten Klinkenachse gelagert ist und an der, der Klinkenachse abgewandt, eine gegen eine Arbeitsflanke der Zahnung gerichtete Sperrfläche ausgebildet ist.

Vorzugsweise deckt der erste Gehäuseabschnitt der Schutzhaube mindestens die im Bereich der Schwenkachse der Hebelanordnung freiliegenden Teile des Ratschenrades sowie des Klinkenmechanismus nach außen hin ab, und der erste Gehäuseabschnitt weist eine Aussparung für den Antriebsabschnitt auf.

Weitere Einzelheiten und Vorteile ergeben sich aus der nachfolgenden Beschreibung von Ausführungsbeispielen und unter Bezugnahme auf die Zeichnungen. Darin zeigen:

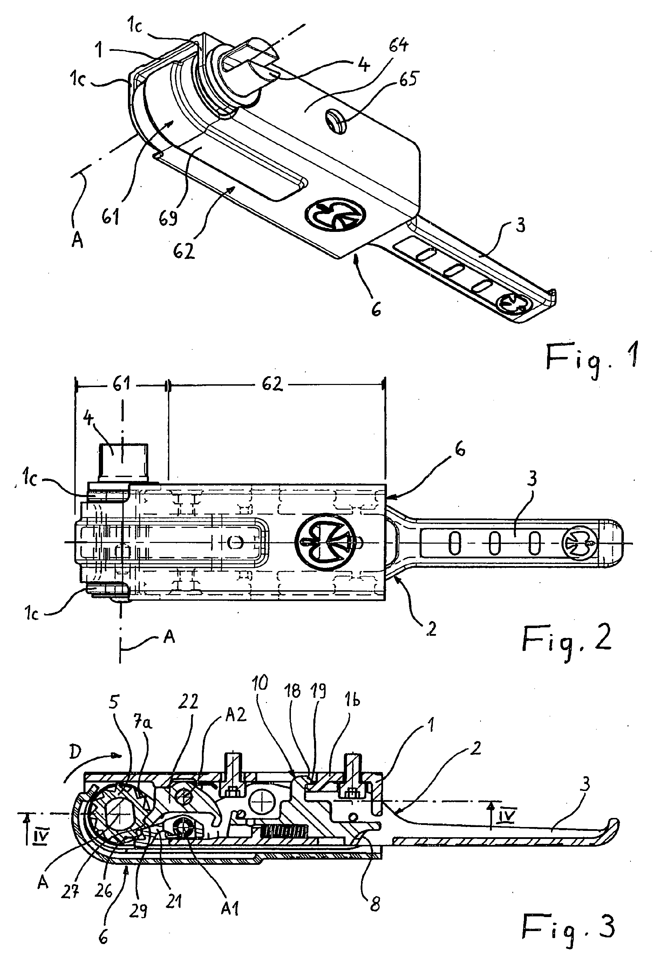

- Fig. 1: in perspektivischer Darstellung eine durch eine Schutzhaube gesicherte Hebelanordnung zum Verschließen eines Nutzfahrzeug-Ladeaufbaus;
- Fig. 2: eine Draufsicht auf die Hebelanordnung;
- Fig. 3: einen Längsschnitt durch die Hebelanordnung, wobei der Handhebel an dem Basisteil verriegelt ist;

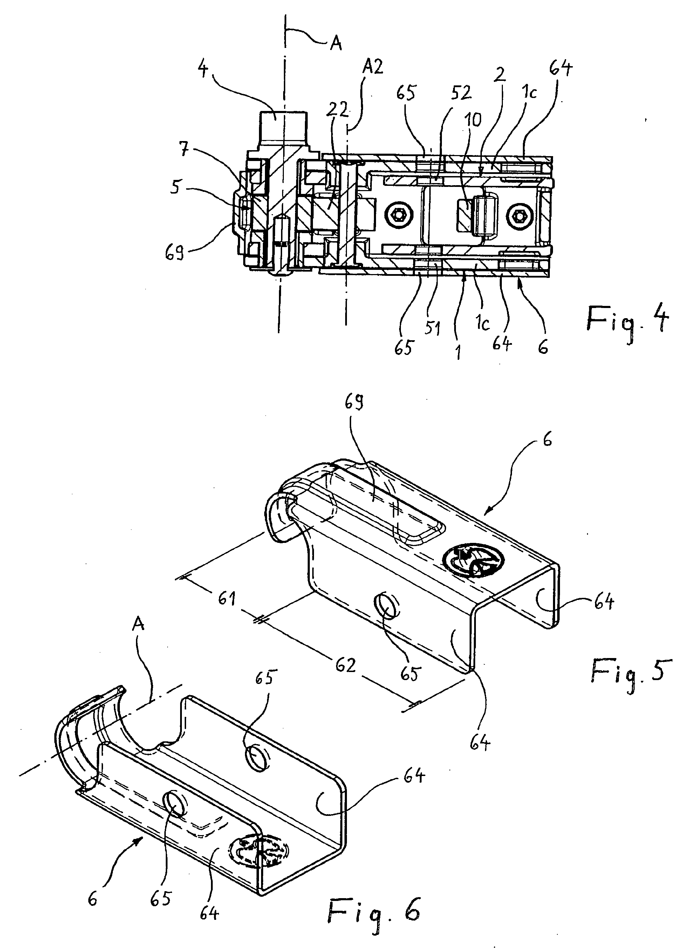

- Fig. 4: einen Schnitt durch die Hebelanordnung gemäß der in Fig. 3 eingezeichneten, versetzten Schnittebene IV - IV;
- Fig. 5: in perspektivischer Darstellung nur das Schutzgehäuse;
- Fig. 6: in anderer perspektivischer Darstellung nur das Schutzgehäuse.

Die Figuren zeigen eine Hebelanordnung zum Verschließen eines Nutzfahrzeug-Ladeaufbaus in der Bauart als Ratschenspannvorrichtung. In dieser Bauart dient die Hebelanordnung dazu, die den Nutzfahrzeugaufbau seitlich verschließende Plane durch Aufwickeln auf eine Spannwelle zu spannen. Die Hauptbestandteile der Hebelanordnung sind ein Basisteil 1, ein Handhebel 2 sowie ein separates, nur zum Zwecke der Zollsicherung lösbar aufsetzbares Schutzgehäuse 6 in Gestalt einer Schutzhaube. Das Basisteil 1 ist mittels mehrerer Schrauben außen an dem Nutzfahrzeugaufbau befestigbar. Es besteht aus einer am Fahrzeugaufbau abgestützten Grundplatte 1 b und zwei dazu rechtwinkligen Seitenwänden 1 c.

Schwenkbar in Bezug auf eine Achse A ist an dem Basisteil 1 der Handhebel 2 gelagert, welcher an seinem anderen, d. h. dem der Schwenkachse A abgewandten Ende einen Handgriff 3 aufweist. Nahe des Handgriffs 3 befindet sich in dem Handhebel eine Betätigungstaste 8 für einen im mittleren Bereich des Handhebels 2 angeordneten Riegel 10.

Auf der Schwenkachse A drehbar gelagert ist ein Ratschenrad 5, welches mit einer Zahnung 7 aus über den Umfang des Ratschenrades gleichmäßig verteilten Flanken 7a und Gegenflanken versehen ist. Die Arbeitsflanken sind die steileren Flanken 7a. Das Ratschenrad 5 ist aus einer Bohrung in der Seitenwand 1 c des Basisteils 1 heraus verlängert, und weist dort einen mit einem Schlitz versehenen Antriebsabschnitt 4 auf. Der Schlitz dient der Drehkupplung mit der nicht dargestellten Spannwelle, die sich über die gesamte Höhe des Nutzfahrzeug-Ladeaufbaus erstreckt, und auf der der vertikale Rand einer Seitenplane aufwickelbar und damit spannbar ist, welche den Ladeaufbau seitlich verschließt. Zur Verwirklichung der Achse A sind die Seitenwände 1 c mit Bohrungen versehen, in denen zylindrische Abschnitte der Achse A drehbar gelagert sind. Der Mittelabschnitt der Achse ist als Ratschenrad 5 ausgebildet, welches mittels eines im Folgenden noch näher beschriebenen Klinkenmechanismus drehbar ist.

Um dieselbe Achse A, jedoch unabhängig von dem Ratschenrad 5, erfolgt die Schwenklagerung des Handhebels 2. In dem Handhebel 2 ist ein Riegel 10 längsbeweglich gelagert, wobei eine Feder den Riegel 10 in Richtung zu dem Handgriff 3 bzw. zu der Betätigungstaste 4 hin beaufschlagt. An dem im Handhebel längsgeführten Riegel 10 befindet sich ein Sperrhaken 18, welcher bei verriegeltem Handhebel eine an dem Basisteil ausgebildete Sperrfläche 19 hintergreift. Der Sperrfläche 19 abgewandt ist der Sperrhaken 18 mit einer Einführschräge von solcher Neigung und Erstreckung versehen dass, wenn der zunächst geöffnete Handhebel 2 wieder zurück in das Basisteil 1 verschwenkt wird, der Riegel 10 durch die Sperrfläche 19 entgegen der Kraft der Feder zurückgedrückt wird und anschließend hinter der Sperrfläche 19 einschnappt. Zum Schließen und Blockieren des Handhebels 2 ist es daher ausreichend, den Handhebel 2 einfach gegen das Basisteil 1 anzudrücken.

Nahe zu dem Ratschenrad 5 ist in dem Handhebel 2 auf einer Klinkenachse A1 eine Mitnahmeklinke 21 schwenkbar gelagert. Ebenfalls nahe zu dem Ratschenrad 5 ist in dem Basisteil 1 auf einer in deren beiden Seitenwänden 1c drehgelagerten zweiten Klinkenachse A2 eine Sperrklinke 22 schwenkbar gelagert. Die beiden Achsen A1, A2 verlaufen parallel zueinander und parallel zu der Achse A des Ratschenrades 5. Die Klinken 21, 22 sind jeweils als Wippen gestaltet und jeweils mit einer Feder versehen welche bestrebt ist, die an den Klinken 21, 22 ausgebildeten Druck- und Sperrflächen gegen die jeweilige Flanke 7a der Zahnung 7 anzudrücken.

Die Mitnahmeklinke 21 weist einen Klinkenvorsprung auf, dessen Gestalt in der Weise an die Zahnkontur des Ratschenrades 5 angepasst ist, dass die Mitnahmeklinke 21 mit einer an dem Klinkenvorsprung angeordneten Druckfläche 26 das Ratschenrad in Drehrichtung D anzutreiben vermag, wenn der Handhebel 2 aufgeschwenkt wird. Der Eingriff der Mitnahmeklinke 21 erfolgt also dann, wenn der Handhebel 2 nach außen von dem Basisteil 1 weggeschwenkt wird. Hingegen greift die an dem Basisteil 1 gelagerte Sperrklinke 22 dann und solange in das Ratschenrad 5 ein, wie der Handhebel 2 wieder zurück in Richtung auf das Basisteil 1 geschwenkt wird. In diesem Fall blockiert eine Sperrfläche 27 der Sperrklinke 22 das Ratschenrad gegen ein Zurückdrehen entgegen der Drehrichtung D, indem sich die Sperrfläche 27 frontal gegen die Flanke 7a des jeweiligen Zahns stützt.

Durch wechselweises Hin- und Herschwenken des Handhebels 2 wird also das Ratschenrad 5 sukzessive in Drehrichtung D angetrieben, um so die Seitenplane zu spannen und so den Ladeaufbau des Nutzfahrzeugs gegen einen unbefugten Zugriff zu verschließen.

Nahe der Sperrfläche 27 befindet sich an der Sperrklinke 22 ein Mitnehmerelement 29. Bei einem entsprechenden Verschwenken der Sperrklinke 22 stößt das Mitnehmerelement 29 gegen die angrenzende Seite der Mitnahmeklinke 21, wodurch die Sperrklinke 22 die Mitnahmeklinke 21 mitnimmt, und beide Klinken 21, 22 zugleich den Eingriff in das Ratschenrad 5 verlieren. Hierdurch ist das Ratschenrad 5 freibeweglich im Sinne eines Freilaufs.

Ist der Spannprozess beendet, wird der Handhebel 2 vollständig in das Basisteil 1 hineingedrückt und auf diese Weise geschlossen, wobei es durch den Riegel 10 zu einem Blockieren des Handhebels 2 kommt. Zur Realisierung eines zolldichten Verschlusses wird sodann ein draht- oder seilförmiges Zollsiegel durch die Hebelanordnung hindurchgeführt, wobei eine doppelte Funktion erzielt wird: Der Handhebel 2 wird durch das Zollsiegel an dem Basisteil 1 gesichert, und außerdem wird eine Freigabe des Riegels 10 verhindert. Zu diesem Zweck befinden sich im Bereich des Riegels 10 erste Öffnungen 51 in den beiden Seitenwänden 1c des Basisteils 1, und zweite Öffnungen 52 in dem Handhebel 2. Da zusätzlich die Öffnungen 51 in dem Basisteil mit den dahinter angeordneten Öffnungen 52 in dem Handhebel fluchten bzw. sich vollständig überdecken, lässt sich das Zollsiegel bei geschlossenem Handhebel durch alle diese Öffnungen 51, 52 hindurchstecken, womit der Handhebel blockiert und nicht mehr durch Aufschwenken manipulierbar ist.

Durch diese Maßnahmen nicht ausgeschlossen sind jedoch Manipulationen im Bereich der Achse A. Um auch hier einen Zugriff zumindest erheblich zu erschweren, z. B. durch Eingriffe an der Mitnahmeklinke 21 oder der Sperrklinke 22, wird auf die Anordnung aus Basisteil 1 und geschlossenem Handhebel 2 das zusätzliche Schutzgehäuse 6 aufgesetzt. Das Schutzgehäuse 6 in Gestalt einer Schutzhaube besteht vorzugsweise aus Kunststoff oder Metallblech und ist ein eigenständiges Bauteil, welches von außen her auf die Anordnung von Basisteil 1 und geschlossenem Handhebel 2 aufsetzbar ist.

Das Schutzgehäuse 6 setzt sich einstückig aus einem ersten Gehäuseabschnitt 61 und einem zweiten Gehäuseabschnitt 62 zusammen. Der erste Gehäuseabschnitt 61 deckt den Bereich der Schwenkachse A der Hebelanordnung nach außen hin ab, während der zweite Gehäuseabschnitt 62 den zwischen der Achse A und dem Handgriff 3 angeordneten, mittleren Bereich der Hebelanordnung nach Art einer Schale von U-förmigem Querschnitt übergreift. Die beiden Schenkel 64 dieser U-Form sind jeweils mit einer Gehäuseöffnung 65 versehen. Diese Gehäuseöffnung 65 ist so angeordnet, dass sie zu der dahinter angeordneten Öffnung 51 in dem Basisteil 1 sowie zu der nochmals dahinter angeordneten Öffnung 52 in dem Handhebel 2 fluchtet.

Wird daher bei aufgesetztem Schutzgehäuse 6 das draht- oder seilförmige Zollsiegel hindurchgeführt, durchdringt dieses gleichzeitig die Gehäuseöffnung 65 des Schutzgehäuses 6 sowie die dahinter im Wesentlichen fluchtend angeordneten Öffnungen 51, 52 des Basisteils und des Handhebels mit der Folge, dass das Schutzgehäuse 6 durch das Zollsiegel fixiert und nicht mehr von der Anordnung aus Basisteil 1 und Handhebel 2 lösbar ist.

Da der erste Gehäuseabschnitt 61 des Schutzgehäuses 6 den Bereich der Schwenkachse A nach außen hin abdeckt, ist eine Manipulation an der Mitnahmeklinke 21 oder der Sperrklinke 22 ausgeschlossen. Für die Abdeckung ist es von Vorteil, dass der erste Gehäuseabschnitt 61 die Form eines Kreissegments hat, dessen Kreismittelpunktsachse mit der Schwenkachse A zusammenfällt. Für einen optimalen Zugriffsschutz erstreckt sich das Kreissegment über einen Winkel von mehr als 90°, und vorzugsweise über einen Winkel von 110°- 180°. Nicht durch den ersten Gehäuseabschnitt 61 abgedeckt ist der Antriebsabschnitt 4 der Achse A.

Zur Verstärkung insbesondere des ersten Gehäuseabschnitts 61 gegen ein gewaltsames Aufbiegen ist das Schutzgehäuse 6 in diesem Bereich mit einer Verstärkungssicke 69 versehen.

### Bezugszeichenliste

- 1: Basisteil
- 1b: Grundplatte
- 1c: Seitenwand
- 2: Handhebel
- 3: Handgriff
- 4: Antriebsabschnitt
- 5: Ratschenrad
- 6: Schutzgehäuse
- 7: Zahnung
- 7a: Flanke
- 8: Betätigungstaste
- 10: Riegel
- 18: Sperrhaken
- 19: Sperrfläche
- 21: Mitnahmeklinke
- 22: Sperrklinke
- 26: Druckfläche
- 27: Sperrfläche
- 29: Mitnehmerelement
- 51: Öffnung im Basisteil
- 52: Öffnung im Handhebel
- 61: erster Gehäuseabschnitt
- 62: zweiter Gehäuseabschnitt
- 64: Schenkel
- 65: Gehäuseöffnung
- 69: Verstärkungssicke

- A: Achse, Schwenkachse
- A1: Achse
- A2: Achse
- D: Drehrichtung

## Patentansprüche

1. Hebelanordnung zum Verschließen eines Nutzfahrzeug-Ladeaufbaus, bestehend aus einem an dem Ladeaufbau befestigbaren Basisteil (1) und einem um eine Achse (A) verschwenkbar gegenüber dem Basisteil angeordneten Handhebel (2), der der Schwenkachse (A) abgewandt mit einem Handgriff (3) versehen und durch einen in dem Handhebel (2) oder in dem Basisteil (1) gelagerten Riegel (10) an dem Basisteil (1) blockierbar ist, wobei zum Hindurchführen eines draht- oder seilförmigen Zollsiegels das Basisteil (1) einerseits und der Handhebel (2) andererseits mit in der Blockierstellung des Handhebels (2) sich zumindest teilweise überdeckenden Öffnungen (51, 52) versehen sind, **gekennzeichnet durch** ein auf die Hebelanordnung aufgesetztes Schutzgehäuse (6) mit daran einstückig ausgebildeten ersten und zweiten Gehäuseabschnitten, wobei der erste Gehäuseabschnitt (61) den Bereich der Schwenkachse (A) der Hebelanordnung nach außen hin abdeckt, und der zweite Gehäuseabschnitt (62) den zwischen der Schwenkachse (A) und dem Handgriff (3) angeordneten, mittleren Bereich der Hebelanordnung schalenförmig übergreift und mit mindestens einer Gehäuseöffnung (65) versehen ist, die in der Blockierstellung zu der Öffnung (51) in dem Basisteil (1) fluchtet.

2. Hebelanordnung nach Anspruch 1, **dadurch gekennzeichnet, dass** der zweite Gehäuseabschnitt (62) des Schutzgehäuses (6) den mittleren Bereich der Hebelanordnung U-förmig übergreift, wobei jeder der beiden Schenkel der U-Form mit einer Gehäuseöffnung (65) versehen ist, die zu der Öffnung (51) in dem Basisteil (1) fluchtet.

3. Hebelanordnung nach Anspruch 2, **dadurch gekennzeichnet, dass** die in den beiden Schenkeln ausgebildeten Gehäuseöffnungen (65) zueinander fluchten.

4. Hebelanordnung nach einem der Ansprüche 1 - 3, **dadurch gekennzeichnet, dass** der erste Gehäuseabschnitt (61) des Schutzgehäuses (6) als ein Kreissegment gestaltet ist, dessen Kreismittelpunktsachse mit der Schwenkachse (A) zusammenfällt.

5. Hebelanordnung nach Anspruch 4, **dadurch gekennzeichnet, dass** sich das Kreissegment über einen Winkel von mehr als 90° und vorzugsweise über 110° bis 180° erstreckt.

6. Hebelanordnung nach einem der vorangehenden Ansprüche, **dadurch gekennzeichnet, dass** das Schutzgehäuse (6) aus Kunststoff oder Metall besteht.

7. Hebelanordnung nach einem der vorangehenden Ansprüche, **dadurch gekennzeichnet, dass** die Hebelanordnung als Ratschenanordnung zum Spannen einer auf eine Spannwelle aufwickelbaren Seitenplane des Nutzfahrzeug-Ladeaufbaus durch Drehen der Schwenkachse (A) ausgebildet ist, und dass die Schwenkachse (A) an einem Ende einen Antriebsabschnitt (4) zur Übertragung der Drehung auf die Spannwelle aufweist.

8. Hebelanordnung nach Anspruch 7, **dadurch gekennzeichnet, dass** ein Mittelabschnitt der Schwenkachse (A) als ein mit einer Zahnung (7) versehenes Ratschenrad (5) ausgebildet ist, und dass die Schwenkachse (A) über einen zum Eingriff in die Zahnung (7) ausgebildeten Klinkenmechanismus drehbar ist.

9. Hebelanordnung nach Anspruch 8, **dadurch gekennzeichnet, dass** sich der Klinkenmechanismus zusammensetzt aus einer beweglich an dem Handhebel (2) gelagerten Mitnahmeklinke (21) sowie einer Sperrklinke (22), die schwenkbar auf einer an dem Basisteil (1) angeordneten Klinkenachse (A2) gelagert ist und an der, der Klinkenachse (A2) abgewandt, eine gegen eine Arbeitsflanke (7a) der Zahnung (7) gerichtete Sperrfläche (27) ausgebildet ist.

10. Hebelanordnung nach Anspruch 8 oder 9, **dadurch gekennzeichnet, dass** der erste Gehäuseabschnitt (61) mindestens die im Bereich der Schwenkachse (A) der Hebelanordnung freiliegenden Teile des Ratschenrades (5) sowie des Klinkenmechanismus nach außen hin abdeckt, und eine Aussparung für den Antriebsabschnitt (4) aufweist.

## Claims

1. Lever arrangement for closure of a commercial vehicle loading structure, consisting of a base part (1) which can be fastened to the load structure and a manual lever (2) which is disposed so that it can swivel about an axis (A) relative to the base part, is provided with a handle (3) remote from the swivel axis (A) and can be locked on the base part (1) by a latch (10) mounted in the manual lever (2) or in the base part (1), wherein to enable a customs seal in the form of a wire or cable to be passed through, the base part (1) on the one hand and the manual lever (2) on the other hand are provided with openings (51, 52) which at least partially overlap in the blocking position of the manual lever (2), **characterised by** a protective housing (6) fitted onto the lever arrangement with first and second housing sections formed integrally thereon, wherein the first housing section (61) covers the region of the swivel axis (A) of the lever arrangement towards the exterior, and the second housing section (62) extends like a shell over the central region of the lever arrangement disposed between the swivel axis (A) and the handle (3), and is provided with at least one housing opening (65) which in the locking position is aligned with the opening (51) in the base part (1).

2. Lever arrangement according to claim 1, **characterised in that** the second housing section (62) of the protective housing (6) extends in a U shape over the central region of the lever arrangement, wherein each of the two arms of the U shape is provided with a housing opening (65) which is aligned with the opening (51) in the base part (1).

3. Lever arrangement according to claim 2, **characterised in that** the housing openings (65) formed in the two arms are aligned with one another.

4. Lever arrangement according to one of claims 1 to 3, **characterised in that** the first housing section (61) of the protective housing (6) is configured as a segment of a circle, the axis of the centre of the circle coinciding with the swivel axis (A).

5. Lever arrangement according to claim 4, **characterised in that** the circle segment extends over an angle of more than 90° and preferably over 110° to 180°.

6. Lever arrangement according to one of the preceding claims, **characterised in that** the protective housing (6) is made from plastic or metal.

7. Lever arrangement according to one of the preceding claims, **characterised in that** the lever arrangement is designed as a ratchet arrangement for tensioning a side panel of the commercial vehicle loading structure which can be wound onto a tensioning shaft by turning of the swivel axis (A), and that the swivel axis (A) has a drive section (4) on one end for transmission of the rotation to the tensioning shaft.

8. Lever arrangement according to claim 7, **characterised in that** a middle section of the swivel axis (A) is designed as a ratchet wheel (5) provided with a toothing (7), and that the swivel axis (A) is rotatable by means of a pawl mechanism designed for engagement in the toothing (7).

9. Lever arrangement according to claim 8, **characterised in that** the pawl mechanism is made up of an entraining pawl (21) movably mounted on the manual lever (2) as well as a locking pawl (22) which is mounted so that it can swivel on a pawl axis (A2) disposed on the base part (1) and on which, remote from the pawl axis (A2), a locking surface (27) is formed which is directed against a working flank (7a) of the toothing (7).

10. Lever arrangement according to claim 8 or 9, **characterised in that** at least the parts of the ratchet wheel (5) as well as the pawl mechanism which are exposed in the region of the swivel axis (A) of the lever arrangement are covered towards the exterior by the first housing section (61) which has a cutout for the drive section (4).

## Revendications

1. Agencement de levier permettant de fermer une structure de chargement de véhicule utilitaire, constitué d'une partie de base (1) pouvant être fixée à la structure de chargement et d'un levier manuel (2) disposé de manière à pouvoir pivoter autour d'un axe (A) par rapport à la partie de base, lequel, à l'opposé de l'axe de pivotement (A), est pourvu d'une poignée (3) et peut être bloqué par un verrouillage (10) au niveau de la partie de base (1) supporté dans le levier manuel (2) ou dans la partie de base (1), la partie de base (1) d'une part, et le levier manuel (2) d'autre part, pour le passage d'un scellement douanier en forme de fil métallique ou de câble, étant pourvus d'ouvertures (51, 52) se recouvrant au moins en partie dans la position de blocage du levier manuel (2), **caractérisé par** un boîtier de protection (6) posé sur l'agencement de levier avec des première et deuxième portions de boîtier réalisées d'une seule pièce sur celui-ci, la première portion de boîtier (61) recouvrant vers l'extérieur la région de l'axe de pivotement (A) de l'agencement de levier et la deuxième portion de boîtier (62) venant en prise par-dessus en forme de coque avec la région centrale de l'agencement de levier disposée entre l'axe de pivotement (A) et la poignée (3) et étant pourvue d'au moins une ouverture de boîtier (65) qui est alignée dans la position de blocage avec l'ouverture (51) dans la partie de base (1).

2. Agencement de levier selon la revendication 1, **caractérisé en ce que** la deuxième portion de boîtier (62) du boîtier de protection (6) vient en prise par le dessus en forme de U avec la région centrale de l'agencement de levier, chacune des deux branches de la forme en U étant pourvue d'une ouverture de boîtier (65) qui est alignée avec l'ouverture (51) dans la partie de base (1).

3. Agencement de levier selon la revendication 2, **caractérisé en ce que** les ouvertures de boîtier (65) réalisées dans les deux branches sont alignées l'une avec l'autre.

4. Agencement de levier selon l'une quelconque des revendications 1 à 3, **caractérisé en ce que** la première portion de boîtier (61) du boîtier de protection (6) est configurée sous forme de segment circulaire, dont l'axe au centre du cercle coïncide avec l'axe de pivotement (A).

5. Agencement de levier selon la revendication 4, **caractérisé en ce que** le segment circulaire s'étend sur un angle supérieur à 90° et de préférence supérieur à 110° à 180°.

6. Agencement de levier selon l'une quelconque des revendications précédentes, **caractérisé en ce que** le boîtier de protection (6) se compose de plastique ou de métal.

7. Agencement de levier selon l'une quelconque des revendications précédentes, **caractérisé en ce que** l'agencement de levier est réalisé sous forme d'agencement à rochet pour tendre une bâche latérale pouvant être enroulée sur un arbre de serrage de la structure de chargement de véhicule utilitaire par rotation de l'axe de pivotement (A), et **en ce que** l'axe de pivotement (A) présente à une extrémité une portion d'entraînement (4) pour le transfert de la rotation à l'arbre de serrage.

8. Agencement de levier selon la revendication 7, **caractérisé en ce qu'**une portion centrale de l'axe de pivotement (A) est réalisée sous forme de roue à rochet (5) pourvue d'une denture (7), et **en ce que** l'axe de pivotement (A) peut tourner par le biais d'un mécanisme de cliquet réalisé pour s'engager dans la denture (7).

9. Agencement de levier selon la revendication 8, **caractérisé en ce que** le mécanisme de cliquet se compose d'un cliquet d'entraînement (21) supporté de manière déplaçable sur le levier manuel (2) ainsi que d'un cliquet d'arrêt (22) qui est supporté de manière à pouvoir pivoter sur un axe de cliquet (A2) disposé sur la partie de base (1) et sur lequel est réalisée, à l'opposé de l'axe de cliquet (A2), une surface d'arrêt (27) orientée vers un flanc de travail (7a) de la denture (7).

10. Agencement de levier selon la revendication 8 ou 9, **caractérisé en ce que** la première portion de boîtier (61) recouvre vers l'extérieur au moins les parties de la roue à rochet (5) exposées dans la région de l'axe de pivotement (A) de l'agencement de levier ainsi que les parties du mécanisme de cliquet, et présente un évidement pour la portion d'entraînement (4).
